# EUROPÄISCHE PATENTSCHRIFT

(11) **EP 4 211 302 B1**
(45) Veröffentlichungstag und Bekanntmachung des Hinweises auf die Patenterteilung: **22.10.2025**
(21) Anmeldenummer: 21777430.6
(22) Anmeldetag: 09.09.2021
(51) Int. Cl.: D06H 7/00, G05B 19/418, B65H 35/00, B23K 26/08, B23K 26/402, B23K 26/03, B23K 37/02, B26D 5/34, B26D 5/32, B26D 5/00, B26F 1/38, B23K 26/082, B23K 26/38, B23K 101/00, B23K 101/18, B23K 101/16, D06H 1/02, D06H 3/08, D06H 7/24, B23K 103/16

(54) **VERFAHREN UND VORRICHTUNG ZUR AUTOMATISIERTEN QUALITÄTSKONTROLLE FÜR SCHNEIDANLAGEN VON FLEXIBLEN MATERIALTEILEN**
METHOD AND DEVICE FOR AUTOMATED QUALITY CONTROL FOR CUTTING SYSTEMS FOR FLEXIBLE MATERIAL PARTS
PROCÉDÉ ET DISPOSITIF DE CONTRÔLE QUALITÉ AUTOMATISÉ POUR DES INSTALLATIONS DE DÉCOUPE DE MATÉRIAUX FLEXIBLES

(30) Priorität: 09.09.2020 DE 102020123555
(43) Veröffentlichungstag der Anmeldung: 19.07.2023
(73) Patentinhaber: HEFA HOLDING GMBH, 63150 Heusenstamm (DE)
(72) Erfinder: HELD, Gunnar, 63150 Heusenstamm (DE)
(74) Vertreter: Ter Meer Steinmeister & Partner
(86) Internationale Anmeldenummer: PCT/EP2021/074795
(87) Internationale Veröffentlichungsnummer: WO 2022/053554

(56) Entgegenhaltungen:
- EP-A1- 3 699 306
- WO-A1-2015/159067
- WO-A1-2017/202606
- WO-A1-2017/202606
- DE-A1- 102016 222 077
- US-A1- 2019 366 574
- US-A1- 2019 366 574

## Beschreibung

### Technisches Gebiet der Erfindung

Die Erfindung betrifft ein Verfahren und eine Vorrichtung zur automatisierten Qualitätskontrolle für Schneidanlagen von flexiblen Materialen, insbesondere von Gewebematerialteilen, die bspw. aus einer Materialbahn aus flexiblem Material ausgeschnitten werden. Die Erfindung ist insbesondere als Qualitätskontrolle von Gewebematerialteilen oder Schnitt-Teilen für Airbags z.B. aus One-Piece-Woven Gewebe (OPW-Gewebe) oder anderem Gewebe geeignet, jedoch nicht auf derartige Anwendungen beschränkt. Vorzugsweise wird die Erfindung bei einer Laserschneidmaschine angewendet.

In den bisher bekannten Verfahren zur Herstellung von Materialteilen, die aus einem flexiblen Material ausgeschnitten werden, wie bspw. Airbags oder Airbagteile, wird das flexible Material, insbesondere in Form von Gewebe, technischen Textilien, Kohlefaser, Glasfaser, Airbag- bzw. OPW-Gewebe, Sitzbezüge, oder beschichtete oder unbeschichtete, ein oder mehrlagige Metall- oder Kunststofffolien, auf einer im wesentlichen horizontalen Fördervorrichtung einer Schneidmaschine, insbesondere einer Laserschneidmaschine, zugeführt. In bestimmten Fällen und je nach Anwendung kann das flexible Material bereits vor dem Schneidvorgang fertig verschweißt, verklebt, verwebt oder allgemein vorbearbeitet sein.

Bei herkömmlichen Schneidanlagen werden die geschnittenen Materialteile nach dem Schneidvorgang händisch abgenommen und anschließend in einer separaten Inspektionsstation wieder ausgelegt und von Mitarbeitern einer visuellen und/oder haptischen Qualitätskontrolle unterzogen.

Die Qualitätsanforderungen an geschnittene Teile, insbesondere an Airbags sind sehr hoch, da diese Bauteile bei einem Unfall extremen Belastungen ausgesetzt werden und die Airbags nur bei einwandfreier Funktion die Sicherheit der Passagiere erhöhen können. Dies gilt grundsätzlich für alle flexiblen Materialien, aus denen Materiealteile ausgeschnitten werden. Die moderne Schneidtechnologie, insbesondere mittels Laser, ermöglicht komplexe Schnittverläufe, deren optische Überprüfung aufwendig und fehleranfällig ist, insbesondere wenn diese Überprüfung manuell durch den Menschen durchgeführt wird.

Neben einer Steigerung der Anzahl der Airbags in einem Fahrzeug nimmt auch die Größe der Airbags selbst zu, teilweise erstrecken sich die Airbags über die gesamte Querseite eines Fahrzeugs von der A-Säule bis zur C-Säule. Daher weisen derartige komplexe Airbagteile Abmessungen von teilweise mehreren Metern auf. Trotz einer stetigen Steigerung der Fertigungsqualität bleibt eine Qualitätskontrolle bei dieser Art von Bauteilen unumgänglich.

Die bisherige manuelle Qualitätskontrolle ist eine monotone, anstrengende Tätigkeit, die aber gleichzeitig ein hohes Maß an Konzentration erfordert. Mit der steigenden Zahl an Airbags in einem Fahrzeug und einer immer größeren Komplexität der einzelnen Airbagteile wird das Auslegen und die anschließende manuelle Qualitätskontrolle zunehmend aufwendiger und komplexer. Zudem ist es für die Mitarbeiter bei kleineren Stückzahlen und einer größeren Anzahl verschiedener Teile besonders schwer Abweichungen der einzelnen Teile von der Norm sicher zu erkennen. Schnellere Schneidprozesse und ein damit verbundener steigender Durchsatz erhöhen die Belastung der Mitarbeiter zusätzlich und die Qualitätskontrolle kann zum limitierenden Faktor bei der Auslastung der Anlage werden. Zudem unterliegt die manuelle Qualitätskontrolle der subjektiven Wahrnehmung des Mitarbeiters. Dies kann zu einer unterschiedlichen Aussortierung je nach Mitarbeiter in der Qualitätskontrolle und damit zu unterschiedlichen Qualitätsstandards führen. Im Falle eines Ausfalls eines Mitarbeiters ist dieser oft schwer zu ersetzen und die Fertigung kann ins Stocken geraten. So kann es vorkommen, dass defekte Teile durch Fehler des Mitarbeiters als gute Teile in den weiteren Produktionsprozess gelangen.

Ein Umlagern von fertig geschnittenen Teilen auf separate Qualitätskontrolltische oder -stationen, hat den Nachteil, dass die Position des geschnittenen Materialteils verändert wird und eventuell vorhandene Laschen oder Vorsprünge falsch oder umgeknickt abgelegt werden und damit nicht mehr alle Abweichungen erkannt werden können.

Darüber hinaus ist bei vielen Anwendungen eine Nachverfolgbarkeit der Produktion erforderlich. Viele Abnehmer von derartigen geschnittenen Materialteilen fordern bspw. für die Qualitätskontrolle und/oder die weitere Bearbeitung Information über die geschnittenen Materialteile, einschließlich Qualitätsdaten, Schneiddaten oder -koordinaten, Bearbeitungsdaten, Bearbeitungsparameter an. Diese Information wird während des Schneidvorgangs ermittelt und/oder ist zum Zeitpunkt des Schneidvorgangs vorhanden und/oder wird bereits von Vorstufen der Produktion bzw. der Herstellung des Materials an die Schneidanlage übermittelt.

US 2019/366574 A1 offenbart eine Schneidemaschine zur Erkennung eines Defekts während eines Herstellungsprozesses. Die Schneidemaschine umfasst eine Grundstruktur mit einer ebenen Oberfläche, die einen Arbeitsbereich definiert, ein Gestell zur Unterstützung einer Materialspule, eine Schneidanordnung und ein Materialinspektionssystem. Das Gestell kann an einem Ende der Basisstruktur positioniert werden, um das Abrollen einer Verbundmaterialbahn von der Materialspule und auf den Arbeitsbereich zu erleichtern. Die Schneidbaugruppe umfasst ein Schneidwerkzeug zum Schneiden der Verbundmaterialplatte im Arbeitsbereich. Die Schneidbaugruppe kann so konfiguriert sein, dass sie sich über ein zweiachsiges Portal relativ zum Arbeitsbereich bewegt. Das Materialinspektionssystem umfasst mehrere berührungslose Ultraschallsensoren, um eine oder mehrere Materialeigenschaften der Verbundmaterialplatte zu messen. Die gemessenen ein oder mehreren Materialeigenschaften können verwendet werden, um Fehler in der Verbundmaterialplatte zu erkennen und vorherzusagen.

EP 3 699 306 A1 offenbart eine numerisch gesteuerte automatische Ausrüstung zum kontinuierlichen Durchführen eines Umfangsendschnitts von halbfertigen Lederprodukten, dadurch gekennzeichnet, dass sie Folgendes umfasst: ein Zufuhreinlassabschnitt der halbfertigen Lederprodukte, der mit Bilderfassungsmitteln versehen ist, die in Richtung der halbfertigen Produkte weisen; einen Schneidbereich stromabwärts des Einlassabschnitts, der mit mindestens einem Schneidkopf ausgestattet ist; Verarbeitungsmittel zur Durchführung einer Digitalisierungsphase des von dem zu behandelnden Lederhalbzeug erfassten Bilds mit einem zugehörigen Film; wobei der mindestens eine Schneidkopf aktiv an eine elektronische Steuerung der numerischen Steuerausrüstung an mindestens gegenüberliegenden Teilen des halbfertigen Lederprodukts für den zugehörigen Zuschnitt der Folie angeschlossen ist mit dem halbfertigen Lederprodukt und/oder zum Fertigstellen der Umfangskanten des halbfertigen Produkts auf der Grundlage des durch die Verarbeitungseinrichtung digitalisierten Bildes.

WO 2017/202606 A1 offenbart ein Verfahren zum Ausschneiden von Gassäcken aus einer Stoffbahn, mit einer Transportvorrichtung zum Transportieren der Stoffbahn in einer Bewegungsrichtung und einer Laserschneidvorrichtung mit mindestens einem Laser, der bei einer Aktivierung einen Laserstrahl aussendet, der zum Ausschneiden der Gassäcke auf die Stoffbahn gerichtet ist, wobei unterschiedliche Gassäcke eine unterschiedliche Form (I bis V) in der Stoffbahn vorgesehen sind und die Laserschneideinrichtung von einer Steuereinrichtung für einen hinsichtlich der Form des Gassacks individuellen Schneidvorgang gesteuert wird Gassack ausschneiden.

WO 2015/159067 betrifft eine Vorrichtung zum Drucken und Schneiden von Etiketten mit Barcodes unter Verwendung eines CO2-Lasers. Eine Qualitätskontrolle der ausgeschnittenen Etiketten wird nicht erwähnt.

DE 10 2016 222 077 A1 betrifft eine Vorrichtung zum Laserschneiden von Gasdiffusionslagen (GDL) aus einer GDL-Gewebebahn.

Eine Aufgabe der Erfindung ist es daher ein automatisiertes Verfahren und eine Vorrichtung anzugeben, die eine schnelle, zuverlässige und reproduzierbare Qualitätssicherung ermöglicht, die die oben genannten Nachteile der bisherigen Qualitätssicherung beseitigt und die sich einfach in bestehende Anlagen integrieren lässt, um mit einer bestehenden Anlage neue Qualitätsstandards erfüllen zu können.

Eine weitere Aufgabe der Erfindung ist es, ein automatisiertes Verfahren und eine Vorrichtung anzugeben, mit denen Information zur Qualitätssicherung sicher und effizient den ausgeschnittenen Materialteilen zugeordnet werden kann.

Diese Aufgaben werden durch die Gegenstände der unabhängigen Ansprüche gelöst. Vorteilhafte Ausgestaltungen der Erfindung sind in den Unteransprüchen angegeben.

Der Erfindung liegt der Gedanke zugrunde bei einer Schneidanlage die ausgeschnittenen Materialteile nicht extra zu bewegen und mittels einer Inline-Qualitätskontrolle ein Qualitätsergebnis zu erzeugen. Durch die fehlende Umplatzierung der ausgeschnittenen Materialteile können eventuell durch das Umlagern verursachte bzw. verdeckte Fehler vermieden werden. Weiter führt die Inline-Qualitätskontrolle zu einer Erhöhung des Durchsatzes und zu einer hohen Reproduzierbarkeit.

Ein anderer Aspekt der Erfindung betrifft die Markierung der ausgeschnittenen Materialteile. Somit lässt sich eine Information über die Qualitätsergebnis sicher an den ausgeschnittenen Materialteilen anbringen oder zuweisen, um somit eine Qualitätssicherung zu gewährleisten und/oder fehlerhafte Teile sicher zu erkennen und es lässt sich auch eine oder mehrere zusätzliche Information über das Material und/ oder den bisherigen Bearbeitungsprozess anbringen oder zuweisen.

In einem ersten Aspekt wird eine Schneidanlage angegeben, umfassend: eine Fördervorrichtung zum Fördern von flexiblem Material; eine Bearbeitungseinheit zum Schneiden des flexiblen Materials in ein oder mehrere Materialteile; eine Erkennungseinheit zur Erfassung des flexiblen Materials und/oder wenigstens einen geschnittenen Materialteils, wobei die Erkennungseinheit in Förderrichtung hinter der Bearbeitungseinheit angeordnet ist, und eine Steuereinheit, die dazu eingerichtet ist, basierend auf einer Information der Erkennungseinheit und/oder auf Markierungsinformation, ein Qualitätsergebnis zu erzeugen und die Schneidanlage zu steuern.

Hier wird somit eine Erkennungseinheit als Inline-Qualitätskontrolleinheit unmittelbar hinter der Bearbeitungseinheit zum Schneiden angeordnet. Die ausgeschnittenen Materialteile werden von der Fördervorrichtung aus der Bearbeitungseinheit herausgefahren und können somit unmittelbar ohne weiteres Umlagern einer Qualitätskontrolle unterzogen werden. D.h. die flexiblen Materialteile können nicht in ihrer Position verändert werden und die Qualitätskontrolleinheit, auch als Erkennungseinheit bezeichnet, kann alle Schnitte, Nähte, Verwebungen, Löcher, Laschen, oder Vorsprünge an der beabsichtigen Position erkennen und überprüfen, ob diese mit den Schnittdaten und/oder Referenzdaten übereinstimmen bzw. den gegebenen Toleranzen liegen.

Alternativ oder zusätzlich kann die Erkennungseinheit auch vor der Bearbeitungseinheit platziert sein, um bspw. Materialfehler auch bereits vor dem Schneiden zu erkennen.

Bei der Erzeugung des Qualitätsergebnis kann zusätzlich auch eine Markierungsinformation mitverarbeitet werden, die von Produktionsvorstufen oder Materialherstellung stammt.

Alternativ oder zusätzlich kann die Schneidanlage eine Markierungseinheit zur Markierung des flexiblen Materials und/oder des wenigstens einen geschnittenen Materialteils basierend auf dem Qualitätsergebnis umfassen. Die Markierung kann beispielsweise durch Aufdrucken auf das geschnittene Materialteil oder durch Einschneiden oder Markieren (Ritzen, Anschmelzen der Oberfläche) des geschnittenen Materialteils erfolgen. Vorzugsweise kann das Einschneiden bzw. Markieren noch von der Bearbeitungseinheit, z.B. durch einen Laser, vorgenommen werden. Es kann auch ein nachgelagerter Drucker zum Aufdrucken vorhanden sein.

Die Markierungseinheit kann in Förderrichtung vor und/oder hinter der Bearbeitungseinheit angeordnet sein. Eine Markierungseinheit vor der Bearbeitungseinheit kann beispielsweise Information über das Material oder Materialfehler an der entsprechenden Position auf das Material aufbringen. Damit fällt es der Erkennungseinheit bei der Qualitätskontrolle leichter einen bereits vor dem Schneiden bestehenden Materialfehler zu erkennen.

Alternativ oder zusätzlich kann die Markierungseinheit auch in Förderrichtung hinter der Erkennungseinheit angeordnet sein, um somit auch das Qualitätsergebnis in die
Markierung einfließen zu lassen. Die Markierung insbesondere von erkannten Fehlern ist sehr wichtig, um eine spätere Weiterverarbeitung von fehlerhaften Teilen möglichst sicher zu verhindern.

Vorzugsweise kann das flexible Material von einer Rolle auf die Fördervorrichtung gefördert werden. Eine Zufuhr des flexiblen Materials in großen bereits geschnittenen Platten oder Paneelen ist auch möglich.

In einer bevorzugten Ausgestaltung kann die Schneidanlage eine Abnahmevorrichtung umfassen. Die Abnahmevorrichtung dient zur Abnahme des wenigstens einen geschnittenen Materialteils von der Fördervorrichtung. Die Abnahmevorrichtung kann hinter der Erkennungseinheit oder bei vorhandener Markierungseinheit hinter der Markierungseinheit angeordnet sein.

In einer bevorzugten Ausgestaltung kann die Schneidanlage eine Restmaterialabnahmevorrichtung oder auch Restgewebeentnahmevorrichtung zur Abnahme eines Restmaterials oder Restgewebes umfassen. Die Restgewebeentnahmevorrichtung kann in Förderrichtung vor oder hinter der Erkennungseinheit und/oder in Förderrichtung vor oder hinter der Markierungseinheit angeordnet sein.

Bei einer optionalen Anordnung der Restmaterialabnahmevorrichtung vor der Erkennungseinheit ist die durchzuführende Qualitätskontrolle einfacher, da die Ränder des ausgeschnittenen Materialteils einfacher erkannt werden können. Allerdings muss dabei in Kauf genommen werden, dass durch das Abnehmen des Restmaterials/Restgewebes ggf. eine Positionsveränderung des ausgeschnittenen Materialteils auftreten kann und eventuell schlecht oder unvollständig geschnittene Bereiche zu einem Anhalten des Prozesses führen können.

Bei einer Anordnung der Restmaterialabnahmevorrichtung hinter der Erkennungseinheit ist die durchzuführende Qualitätskontrolle anspruchsvoller, da nun die Schnitte erkannt werden müssen. Allerdings wird dadurch erreicht, dass das ausgeschnittene Materialteil für die Qualitätskontrolle an seiner Position verbleibt.

Die Restmaterialabnahmevorrichtung kann in Förderrichtung an der gleichen Position wie die Abnahmevorrichtung oder in Förderrichtung hinter der Abnahmevorrichtung angeordnet sein. Dies ist dann von Vorteil, wenn die erforderliche Länge in der Halle für die Fördervorrichtung begrenzt ist.

In einer bevorzugten Ausgestaltung kann die Steuereinheit dazu eingerichtet sein, basierend auf einer Information der Erkennungseinheit und/oder auf Markierungsinformationen, die Abnahmevorrichtung und/oder die Restmaterialabnahmevorrichtung und/oder die Markierungseinheit zu steuern. Somit lassen sich basierend auf dem Qualitätsergebnis die nachfolgenden Einheiten steuern und ggf. stoppen bzw. bei gut erkannten Materialteilen die entsprechende Abnahme durch die Abnahmevorrichtung.

In einer bevorzugten Ausgestaltung kann die Erkennungseinheit eine Kamera und/oder einen Sender und Empfänger und/oder einen oder mehrere Sensoren und/oder eine Beleuchtungseinheit umfassen. Je nach Material können verschiedene Geräte zur Qualitätskontrolle eingesetzt werden. So ist es bspw. bei ein- oder mehrlagigem Gewebe sinnvoll, das ausgeschnittene Materialteil mit einer Kamera und je nach Dicke des Gewebes mit einer zusätzlichen Beleuchtung zu arbeiten. Bei mehrlagigen beschichten Folien kann eine Ultraschallvorrichtung bestehend aus Sender und Empfänger eingesetzt werden.

Vorzugsweise kann die Beleuchtungseinheit Licht mit einer an das Material oder eine Materialkomposition angepassten Wellenlänge ausgeben.

Vorzugsweise kann das flexible Material zwischen Sender und der Empfänger liegen und der Sender kann bspw. Ultraschall ausgeben, der dann vom Empfänger empfangen wird, um Information über die Materialzusammensetzung des flexiblen Materials zu erhalten.

Der Aufnahmebereich der Kamera oder des Sensors kann eine quadratische, rechteckige und/oder linienförmige Form aufweisen. So können bspw. streifenförmige Bilder aufgenommen werden, die dann in der Steuereinheit zusammengesetzt werden, um anhand von bspw. Kontrastunterschieden die Schnitte, Nähte, Löcher etc. zu erkennen. Je nach Anwendung und bspw. der Fördergeschwindigkeit kann auch bereits ein streifenförmiges Teilbild auf Fehler bzw. Toleranzen überprüft werden.

Vorzugsweise kann die Beleuchtungseinheit auf einer der Erkennungseinheit gegenüberliegenden Seite des flexiblen Materials angeordnet sein und/oder auf das flexible Material gerichtet sein.

Die Beleuchtungseinheit kann auch zwischen Fördervorrichtung und dem flexiblen Material angeordnet sein.

In einer bevorzugten Ausgestaltung kann das Qualitätsergebnis auf einer Überprüfung der Position der Schnitte und Anzahl der Nähte und/oder Position und Anzahl von Ausschnitten/Löchern und/oder auf der Qualität von verwebten Stellen und/oder Schweißnähten und/oder Klebestellen und/oder auf der Position der verwebten Stellen, Klebestellen und/oder Schweißnähten und/oder auf der Position von Markierungen auf dem flexiblen Material basieren.

In einer bevorzugten Ausgestaltung kann die Steuereinheit eingerichtet sein, das wenigstens eine ausgeschnittene Materialteil auf Verzug zu prüfen. Dazu kann überprüft werden ob die Länge und/oder die Breite des wenigstens einen ausgeschnittenen Materialteils den Soll- oder Referenzvorgaben entsprechen und/oder ob Laschen, Vorsprünge oder Ausschnitte am wenigstens einen ausgeschnittenen Materialteil an der jeweiligen korrekten Position angeordnet sind.

In einer bevorzugten Ausgestaltung kann die Steuereinheit dazu eingerichtet sein, über eine optische Ausgabeeinheit an der Anlage, bspw. in Form einer Lampe oder auf einem Display, ein freigegebenes Airbagteil zu anzuzeigen. D.h. bei einem positivem Qualitätsergebnis leuchtet in der Spur des freigegebenes Airbagteils eine grüne Lampe oder LED oder der Anlagenbediener erhält diese Information über ein Display, in dem die guten Airbagteile auf dem Display mit einer vorgegebenen Farbe für eine Freigabe eingefärbt sind.

Es ist alternativ oder zusätzlich auch möglich, bspw. über ein freigegebenes Airbagteil über eine Projektion des Qualitätsergebnisses auf das Airbagteil anzuzeigen. D.h. es kann ein z.b grüner Punkt auf ein freigegebenes Airbagteil gestrahlt werden.

Bei einem negativen Qualitätsergebnis für ein mangelhaftes Airbagteil kann die optische Ausgabeeinheit dieses Airbagteil als Ausschussteil oder als ein nacharbeitbares Airbagteil anzuzeigen, bspw. durch rot für ein Ausschussteil und gelb für ein nacharbeitbares Airbagteil.

Auch hier kann die Ausgabe des Qualitätsergebnisses mittels Projektion auf das Airbagteil oder auch allgemein auf das Materialteil erfolgen.

Allgemein kann die Steuereinheit ihr Qualitätsergebnisses über eine optische Ausgabeeinheit und/oder auf einem Display ausgeben oder das Qualitätsergebnis für ein Materialteil durch eine Projektion auf das Materialteil anzeigen.

In einer bevorzugten Ausgestaltung kann die Erkennungseinheit eine Markierung von Materialfehlern auf dem flexiblen Material erkennen.

Materialfehler des flexiblen Materials oder deren Position, der bereits vor dem Schneiden bekannt sind, können auch in einer Datei enthalten sein, die von der Steuereinheit der Schneidanlage verarbeitet wird, um die Abnahmevorrichtung und ggf. die Markierungseinheit entsprechend zu steuern und das fehlerhafte Materiateil nicht abzunehmen und/oder als fehlerhaft zu markieren.

In einer bevorzugten Ausgestaltung kann das flexible Material ein Gewebeband sein, insbesondere zur Airbagproduktion, welches mehrlagige Bereiche und einlagige Bereiche aufweist, bspw. ein one-piece-woven (OPW)- Gewebe.

Vorzugsweise kann die Bearbeitungseinheit eine Laserschneidvorrichtung zum Ausschneiden von Gewebematerialteilen zur Airbagproduktion sein.

In einer bevorzugten Ausgestaltung kann die Steuereinheit dazu eingerichtet sein, bei einem positiven Qualitätsergebnis, das entsprechende ausgeschnittene Gewebematerialteil für die Abnahme freizugeben und bei einem negativen Qualitätsergebnis ein mangelhaftes Airbagteil als Ausschussteil oder als ein nacharbeitbares Airbagteil zu kategorisieren.

In einer bevorzugten Ausgestaltung kann die Steuereinheit dazu eingerichtet sein, die Abnahmevorrichtung so zu steuern, dass die Ausschussteile und die nacharbeitbaren OPW-Gewebematerialteile getrennt voneinander abgelegt werden.

Vorzugsweise kann die Steuereinheit dazu eingerichtet sein, basierend auf der Information der Erkennungseinheit einen Fehler und/oder eine Fehlerursache zu identifizieren und/oder diese zu korrigieren und/oder Hinweise auf Fehler und/oder Verschleiß an die Schneidanlage auszugeben. Damit lassen sich wiederholte Fehler vermeiden und die Ausschussrate reduzieren. Durch Ausgabe der Fehler als optisches oder akustisches Warnsignal kann der Anlagenbediener eingreifen und ggf. für folgende Schneidprozesse Veränderungen vornehmen, um die Qualität für Folgeteile zu verbessern.

In einer bevorzugten Ausgestaltung kann die Steuereinheit dazu eingerichtet sein die Qualitätskontrolle während eines kontinuierlichen und/oder diskontinuierlichen und/oder gestoppten Betriebs der Schneidanlage durchzuführen. D.h. Erkennungseinheit kann auch bei gestopptem Förderband ein Foto aufnehmen und diesen dann mit den folgenden Fotos bei Fortsetzen des Prozesses zusammenfügen, um die Lage der Schnitte, Nähte, Löcher ect. zu erkennen.

In einem anderen Aspekt wird ein Verfahren zur automatisierten Inline-Qualitätskontrolle von wenigstens einem aus einem flexiblen Material ausgeschnitten Materialteil angegeben, umfassend die folgenden Schritte: Zuführen eines flexiblen Materials auf einer Fördervorrichtung, Schneiden des flexiblen Materials mittels einer Bearbeitungseinheit in ein oder mehrere Materialteile; Erfassen wenigstens eines Teils des flexiblen Materials und/oder des ausgeschnittenen Materialteils mittels einer Erkennungseinheit; Durchführen einer Qualitätskontrolle basierend auf Information der Erkennungseinheit und wenigstens einem Referenzwert.

Vorzugsweise umfasst das Verfahren die Steuerung der Bearbeitungseinheit und/oder einer Abnahmevorrichtung und/oder einer Restmaterialabnahmevorrichtung und/oder eines Markierers basierend auf dem Ergebnis der Qualitätskontrolle.

Da das flexible Material erfindungsgemäß auf der Fördereinrichtung gefördert wird, kann bspw. ein Drucker oder Lasermarkierer der Markierungseinheit das Materialteil markieren, auch ohne Qualitätskontrolle.

Ein nacharbeitbares Materialteil kann bspw. ein kleines Loch enthalten, welches mittels Laser ausgeschnitten wurde und durch die heißen Ränder des Materials dann wieder mit den Lochausschnitt verklebt.

### Kurze Beschreibung der Zeichnungen

Figur 1 zeigt eine perspektivische Darstellung einer herkömmlichen Schneidanlage mit manueller Gewebematerialteilabnahme und Qualitätskontrolle.
Figur 2 zeigt eine schematische Darstellung einer ersten Ausführungsform der erfindungsgemäßen Schneidanlage mit Inline-Qualitätskontrolle.
Figur 3 zeigt eine schematische Darstellung einer zweiten Ausführungsform der erfindungsgemäßen Schneidanlage mit Inline-Qualitätskontrolle.
Figur 4a, b zeigen in einer schematische Darstellung Varianten einer dritten Ausführungsform der erfindungsgemäßen Inline-Qualitätskontrolle.
Figur 5 zeigt eine schematische Darstellung einer Nachrüstlösung der erfindungsgemäßen Inline-Qualitätskontrolle an bestehenden OPW-Schneidanlagen.
Figur 6 zeigt ein ausgeschnittenes Materialteil.
Figur 7 zeigt ein anderes ausgeschnittenes Materialteil mit Toleranzbereichen;
Figur 8 zeigt ein Verfahren der erfindungsgemäßen Inline-Qualitätskontrolle.

### Ausführungsformen der Offenbarung

Im Folgenden wird die Erfindung anhand einer Airbagschneidanlage beschrieben. Die Erfindung ist jedoch nicht auf das Schneiden und Überprüfen bzw. Markieren von OPW Gewebe beschränkt und lässt sich auf viele Anwendungsbereiche übertragen, in denen flexible Materialen durch einen Schneidprozess geschnitten werden. So ist es möglich, ein- oder mehrlagige Bleche oder Folien aus Metall oder Kunststoff, beschichtet oder unbeschichtet mittels einer Laserschneidanlage zu schneiden. Diese ausgeschnittenen Materialteile können bspw. Batterieelektroden, Blech- oder Folienteile oder Sitzbezüge sein.

Im Folgenden werden, sofern nicht anders vermerkt, für gleiche und gleichwirkende Elemente gleiche Bezugszeichen verwendet. Die dargestellten Elemente sind nicht als maßstabsgerecht anzusehen, vielmehr können einzelne Elemente zum besseren Verständnis übertrieben groß dargestellt werden.

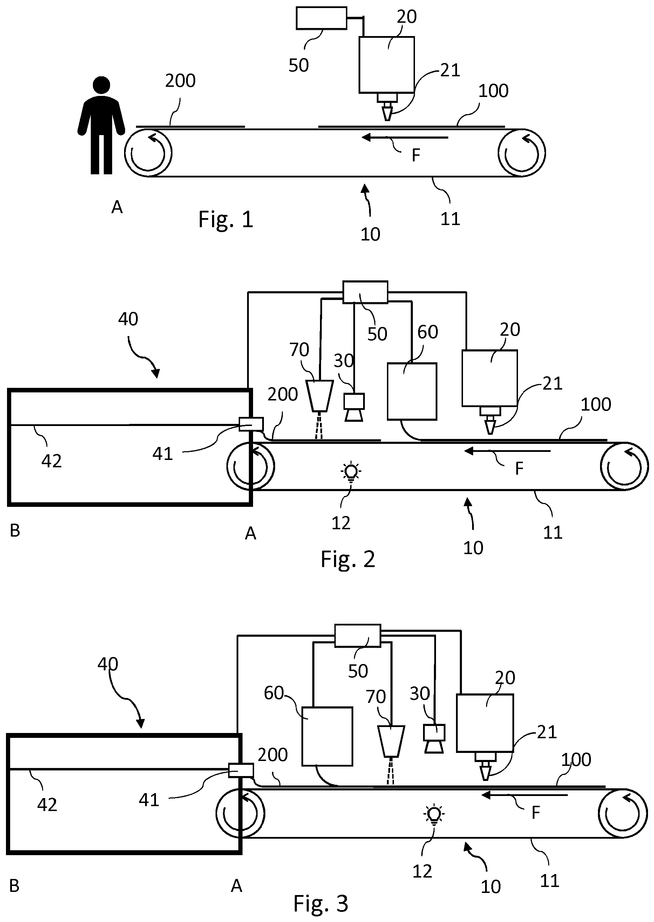

Figur 1 zeigt eine herkömmliche Schneidanlage. Nach dem Schneidvorgang des Gewebematerialbandes 100 werden die ausgeschnittenen Gewebematerialteile 200 von Mitarbeitern manuell von der Fördervorrichtung 10 abgenommen. Der Verschnitt wird nach dem Schneidvorgang des Gewebematerialbandes 100 durch die Mitarbeiter von den Gewebematerialteilen 200 separiert. Anschließend werden die Gewebematerialteile 200, die häufig sehr viele Laschen umfassen, auf einem Tisch abgelegt und einer manuellen Qualitätskotrolle durch einen Mitarbeiter unterzogen.

Ziel der vorliegenden Erfindung ist es eine Inline-Qualitätskontrolle anzugeben, die einen erhöhte Qualitätssicherheit bietet, einen erhöhten Automatisierungsgrad bietet und ein reproduzierbares Ergebnis liefert, um die Anzahl möglicher Fehlerquellen und den Einfluss menschlicher Toleranzen zu reduzieren.

Weiter soll die erfindungsgemäße Inline-Qualitätskontrolle auch an bestehenden Anlagen nachgerüstet werden können.

Die Förderrichtung F wird als die Richtung definiert, in die das Gewebematerialband 100 oder die Gewebematerialteile 200 auf der Fördervorrichtung 10 bewegt werden. Die Förderrichtung F ist in den Figuren 2 bis 4b durch einen Pfeil dargestellt. Formulierungen wie oberhalb und unterhalb, über oder unter und horizontal bzw. vertikal beschreiben die Lage der Komponenten in einem aufgebauten System bzw. wie diese Komponenten in den Figuren angeordnet sind.

Um die vorgenannten Nachteile zu überwinden, wird daher eine Inline-Qualitätskontrolle der Gewebematerialteile 200, wie in den Figuren 2 bis 5 dargestellt, vorgeschlagen, die auf der gleichen Fördervorrichtung 10 durchgeführt wird, auf der auch die Bearbeitung des Gewebematerialbandes 100 erfolgt oder unmittelbar mit der Fördervorrichtung 10 zusammenwirkt, die der Bearbeitungseinheit 20 zugeordnet ist, sodass die bearbeiteten Gewebematerialteile 200 nicht erst abgenommen und dann erneut ausgelegt, ausgerichtet und glattgestrichen werden müssen.

Die Figuren 2 bis 4b zeigen verschiedene Ausführungsformen der erfindungsgemäßen automatisierten Schneidanlage mit Inline-Qualitätskontrolle. Die Anlagen in den Figuren 2 bis 4b unterscheiden sich u.a. in der Anordnung oder Position der Restmaterialabnahmevorrichtung 60, die den Verschnitt oder das Restegewebe von den Gewebematerialteilen 200 trennt. Die Restmaterialabnahmevorrichtung 60 kann bspw. das Restmaterial oder Restgewebe aufrollen und/oder nach oben abführen.

In Figur 2 ist die Restmaterialabnahmevorrichtung 60 in Förderrichtung hinter der Bearbeitungseinheit 20 angeordnet, d.h. die Restmaterialabnahmevorrichtung 60 ist zwischen Bearbeitungseinheit 20 und Erkennungseinheit bzw. Kamera 30 angeordnet.

In Figur 3 ist die Restmaterialabnahmevorrichtung 60 in Förderrichtung vor der Abnahmevorrichtung 40 angeordnet aber hinter der Erkennungseinheit 30 angeordnet.

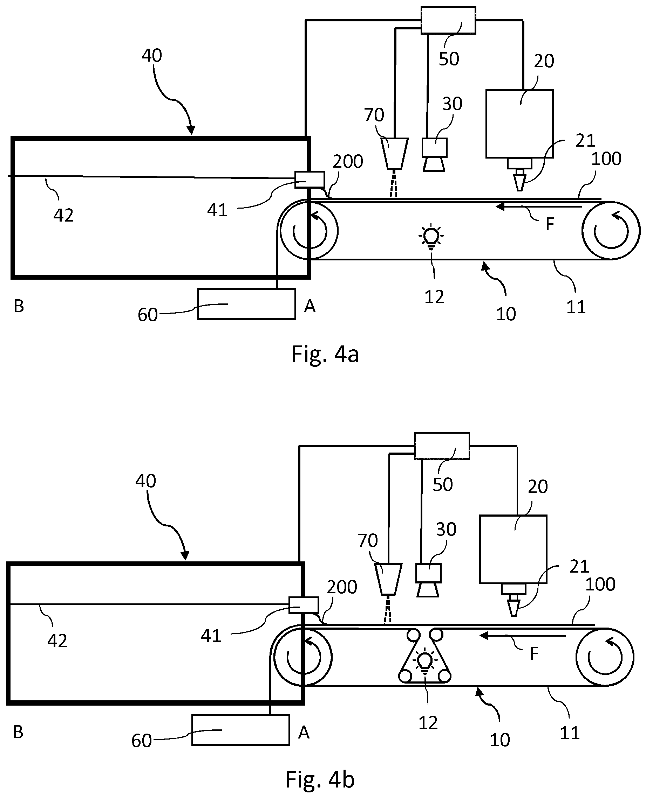

In den Figuren 4a und 4b wird der Verschnitt oder das Restmaterial am Ende der Fördervorrictung 10 von der Restmaterialabnahmevorrichtung 60 in einer Box aufgefangen. Die Airbagschneidanlage mit der erfindungsgemäßen automatisierten Inline-Qualitätssicherung umfasst eine Fördervorrichtung 10, auf der das Gewebematerialband 100 gefördert wird, eine Bearbeitungseinheit 20, vorzugsweise eine Laserschneidvorrichtung mit wenigstens einem verfahrbaren Laserschneidkopf 21 oder einem oder mehreren Laserscannern, die die Gewebematerialteile 200 ausschneidet, die dann weiter auf der Fördervorrichtung 10 in Richtung Abnahmevorrichtung 40, insbesondere zur Abnahmeposition A befördert werden. Zwischen der Abnahmeposition A und der Bearbeitungseinheit 20 erfolgt eine Inline-Qualitätskontrolle beispielsweise mittels einer Kamera 30 oder einer Linienkamera (nicht dargestellt), die die Form, Kontur, Größe, Verzug und/oder den Schnittverlauf und/oder Markierungen oder Löcher der ausgeschnittenen Gewebematerialteile 200 bzw. des gesamten Gewebematerialbandes 100 überprüft.

Hier wird bspw. ein Vergleich von Schnittmarken der Gewebematerialteile 200 mit dem Soll-Schnitt oder einer Referenz vorgenommen und überprüft, ob die Schnittmarken (Schnitte oder Schneidnaht) innerhalb der Toleranz der Soll-Schnitt Vorgaben liegen. Es kann alternativ oder zusätzlich die Position und/oder Anzahl von Löchern oder Öffnungen innerhalb der Gewebematerialteile 200 überprüft werden. Dieser Vergleich kann basierend auf Daten vorgenommen werden, die zur Ansteuerung der Bearbeitungseinheit 20 verwendet wurden. Die Qualitätskontrolle liefert die Aussage bzw. das Qualitätsergebnis, ob ein ausgeschnittenes Gewebematerialteil 200 den Anforderungen entspricht oder als Ausschuss oder als nachbearbeitbares Teil behandelt werden soll.

Die Qualitätskontrolle kann mittels einer Steuereinheit 50 vorgenommen werden, die die Soll- Vorgaben, die gespeichert sind oder von der Bearbeitungseinheit 20 geliefert werden, mit den Ist-Daten, die von der Erkennungseinheit 30 aufgenommen werden, unter Berücksichtigung der Toleranzwerte vergleicht, um ein gutes Gewebematerialteil 200 zu identifizieren. Die Erkennungseinheit 30 kann als Kamera ausgebildet sein, um anhand der mit der Kamera 30 aufgenommenen Fotos oder Bilder die Abmessungen der Gewebematerialteile 200 und/oder Schnitte oder Nähte detektieren und mit den Vorgaben zu vergleichen. Dazu werden Helligkeits- und/oder Kontrastunterschiede zwischen Gewebematerialteil 200 und Schnitt detektiert, wodurch sich auf dem Foto der Erkennungseinheit 30 exakt die Position und Länge der Schnitte, Nähte, die Anzahl und Position von Löchern, Verwebungen und Laschen erkennen lässt.

Der Aufnahmebereich der Kamera 30 kann dabei so gewählt werden, dass vollständige Gewebematerialteile 200 aufgenommen werden können, um basierend auf diesen Aufnahmen einen Soll-Ist-Vergleich, bspw. durch Vergleich vom Soll-Muster mit dem Ist-Muster oder durch Vergleich der Soll-Schnittkoordinaten mit den Ist-Schnittkoordinaten durchzuführen.

Es ist aber auch möglich, gerade bei größeren Gewebematerialteilen 200, dass von einem Gewebematerialteil 200 mehrere Teilaufnahmen nacheinander aufgenommen werden und diese anschließend zu einer Gesamtaufnahme des Gewebematerialteils 200 zusammengeführt werden, um dann überprüft zu werden. Dabei können auch schon die Einzelaufnahmen auf Abweichungen überprüft werden.

Weiter ist es auch möglich, dass die Kamera 30 in Form einer oder mehrerer Linienkameras ausgeführt ist, die die gesamte Breite des Förderbandes 11 und des darauf liegenden Gewebematerialteils 200 nach dem Schneidvorgang aufnehmen. Die Breite einer Aufnahme der Linienkamera in Förderrichtung kann auf bis eine Pixellänge bzw. einige wenige Pixellängen reduziert werden. Die mehreren Aufnahmen der Linienkamera werden zu einem Linienbild zusammengesetzt, um zu erkennen, ob ein Schnitt in Bereiche des Gewebematerialteils 200 hineinläuft, die verwebt oder verschweißt sind oder allgemein nicht geschnitten werden dürfen.

Die Aufnahmefrequenz der Kamera 30 wird an die Fördergeschwindigkeit der Fördervorrichtung 10 angepasst oder mit der Fördergeschwindigkeit der Fördervorrichtung 10 synchronisiert, um eine vollständige Aufnahme der Gewebematerialteile 200 ohne Überschneidungen zu erhalten. Vorzugsweise kann ein Soll-Ist-Vergleich bereits mit der aktuellen Aufnahme der Kamera 30 insbesondere der Linienkamera durchgeführt werden, bevor ein Gewebematerialteil 200 vollständig ausgeschnitten ist und die Einzelaufnahmen des Gewebematerialteils 200 zu einer Gesamtaufnahme zusammengefügt sind, um Fehler des Gewebematerialteils 200 möglichst früh zu erkennen und damit zu vermeiden, dass mehrere Gewebematerialteile 200 mit demselben Fehler produziert werden.

Die Steuereinheit 50 ist dazu eingerichtet, in den Aufnahmen der Kamera 30 die Schnittkanten 62 und verwebte, zusammengeschweißte oder vernähte Bereiche 63 zu erkennen. Der Schnittbereich 64 könnte beispielsweise im Vergleich zu dem OPW-Gewebematerialteil 200 in der Aufnahme deutlich dunkler sein. Verwebte, zusammengeschweißte oder vernähte/verklebte Bereiche 63 können im Vergleich zu nicht verwebten, zusammengeschweißten oder vernähten Bereichen, eine unterschiedliche Oberflächenstruktur aufweisen und dadurch von der Steuereinheit 50 identifiziert werden. Es ist aber auch möglich, dass diese Bereiche durch eine andere Reflexion des Lichtes von der Steuereinheit 50 erkannt werden können. Bei einer Beleuchtung von einer der Kamera 30 gegenüberliegenden Seite mittels einer zusätzlichen Beleuchtung 12 können Schnittmarken oder Schnittkanten 62 und Schnittbereiche 64 in der Aufnahme als dunkle Bereiche und verwebte, zusammengeschweißte oder vernähte Bereiche 63 als helle Bereiche von der Steuereinheit 50 erkannt werden.

Erkennt die Steuereinheit 50 einen Fehler, kann eine mögliche Fehlerreaktion die Drosselung der Geschwindigkeit der Fördervorrichtung 10 sein. Diese Fehlerreaktion kann insbesondere bei unvollständigen Schnitten sinnvoll sein. Erkennt die Steuereinheit 50 die Fehlerursache besteht die Möglichkeit, dass die Steuereinheit 50 eine Korrektur von Parametern in der Bearbeitungseinheit 20 vornimmt. Beispielsweise kann die Steuereinheit 50 dazu ausgebildet sein, die Schnittgeschwindigkeit zu reduzieren, Parameter der Laserschneidanlage zu korrigieren und/oder bei einem Versatz der Schnittlinien zur Sollposition die Position der Schneidvorrichtung nachregeln. Ebenso ist es möglich, bei einer Häufung von schlecht oder unvollständig geschnittenen Gewebematerialteilen 200 die Leistung der Laserschneidköpfe zu erhöhen, um einen vollständigen Schnitt zu erzielen.

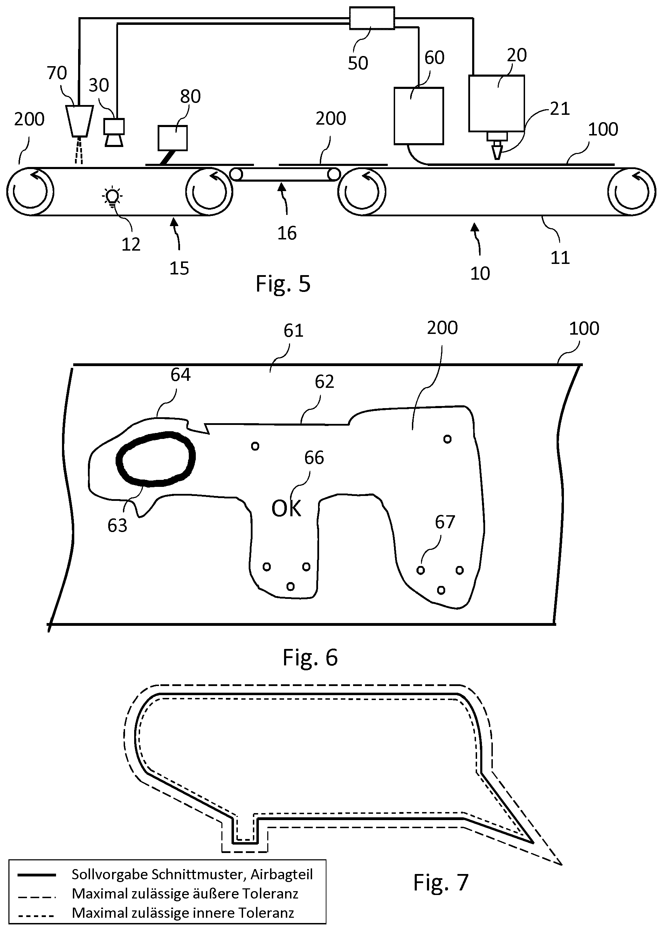

Figur 6 zeigt ein beispielhaftes Schnittmuster eines Gewebematerialteils 200. In der Figur 6 ist im inneren Bereich das ausgeschnittene Gewebematerialteil 200 zu erkennen, welches innerhalb des Restgewebes 61 der Gewebematerialbahn 100 liegt. Dazwischen befindet sich der Schnittbereich 64 oder die Schnittnaht 62. Die Dimensionen des ausgeschnittenen Gewebematerialteils 200 werden mit einer Soll-Vorgabe bzw. Referenz verglichen.

Figur 7 zeigt ein anderes beispielhaftes Schnittmuster eines Gewebematerialteils 200. In Figur 7 ist die Soll-Vorgabe mit einer durchgezogenen Linie dargestellt. Eine zulässige äußere und innere Toleranz sind jeweils als gestrichelte Linien dargestellt. Die Darstellung ist nur beispielhaft und die Dimensionen der zulässigen Toleranzen sind zu Veranschaulichungszwecken sehr groß gewählt und entsprechen nicht der Realität. Tatsächlich sind die Toleranzen bei der Herstellung von OPW-Gewebematerialteilen für Airbags sehr klein. Die innere und/oder äußere Toleranzvorgabe kann ein eigenständiges Muster sein, dass in Bezug auf die Ausrichtung der Position des Schnittmusters innerhalb oder um dieses angeordnet wird. Dies bietet den Vorteil, dass unterschiedliche Toleranzen entlang des Schnittmusters des Gewebematerialteils 200 gewählt werden können. Es ist aber auch möglich, dass die Toleranz als ein gleichbleibender Abstand von der Schnittnaht oder als ein Verhältnis zu dem Schnittmuster definiert ist. Weiter ist es möglich, dass beispielsweise die innere Toleranz kleiner gewählt werden kann als die äußere Toleranz (wie in Figur 7 beispielhaft dargestellt).

Ein ständiger Vergleich der Schnittlinien mit den Soll-Vorgaben ermöglicht es, bereits langsam wegdriftende Werte zu erkennen und diese zu korrigieren, bevor ein tatsächlicher Fehler auftritt. Die Steuereinheit 50 kann dazu ausgebildet sein, die Korrekturen zu speichern und die Bearbeitungseinheit 20 adaptiv zu korrigieren.

Dadurch ist eine Reduzierung der Ausschussmenge möglich. Die Korrekturen der Steuereinheit 50 können ebenfalls überwacht werden und bei einer Überschreitung von vorgegebenen Grenzwerten kann ein Fehler ausgegeben werden bzw. kann dies ein Hinweis auf Verschleiß der Anlage oder bestimmter Komponenten der Anlage sein.

Weiter besteht die Möglichkeit, dass, wenn die Steuereinheit 50 den Fehler nicht zuordnen kann, die Anlage angehalten wird und/oder ein Signal (bspw. akustisch oder optisch) ausgeben werden kann, um einen Anlagenbediener auf den Fehler hinzuweisen.

Weiter kann die Steuereinheit 50 auch dazu eingerichtet sein, Gewebematerialteile 200, die bereits vor der Bearbeitung an der Bearbeitungseinheit 20 als fehlerhaft gekennzeichnet wurden, zu erkennen. Beispielsweise kann fehlerhaft verwebtes Gewebematerialband 100 direkt nach dem Verweben an den entsprechenden Stellen als fehlerhaft markiert werden, bspw. von einer nicht dargestellten Markierungseinheit 70, die in Förderrichtung vor der Bearbeitungseinheit 20 angeordnet ist. Dadurch können beispielsweise nur die fehlerhaften Bereiche eines Gewebematerialbandes 100 zuverlässig aussortiert werden und somit der Ausschuss reduziert werden. Weiter kann dadurch vermieden werden, dass bei der Qualitätskontrolle nach der Bearbeitungseinheit 20 Gewebematerialteile 200, die Fehler von vorangegangenen Bearbeitungsstationen aufweisen, irrtümlich als "Gut"-Teile identifiziert werden.

Es besteht aber auch die Möglichkeit, dass die Steuereinheit 50 Information bezüglich der Bearbeitungsqualität der vorangegangenen Station digital bzw. als Datei erhält. Gewebematerialteile 200, bzw. Bereiche des Gewebebandes 100, die bereits vor der Bearbeitungseinheit 20 als fehlerhaft erkannt wurden, können dann nicht mehr fälschlicherweise als "Gut"-Teil eingeordnet werden.

Mit dem so erzeugten Qualitätsergebnis zu jedem einzelnen Gewebematerialteil 200 kann die Abnahmevorrichtung 40 angesteuert werden. Somit können die einzelnen Abnahmemodule 41 der Abnahmevorrichtung 40 gemäß Figur 2 bis 4 selektiv angesteuert werden, um nur die als "gut" erkannten Gewebematerialteile 200 abzunehmen und zur Ablageposition B zu transportieren. Falls nur ein Abnahmemodul 41 an der Abnahmevorrichtung 40 vorhanden ist, kann dieses so gesteuert werden, dass nur die "guten" Teile abgenommen werden und die als Ausschuss gekennzeichneten Teile nicht abgenommen werden und entweder über die Restmaterialabnahmevorrichtung 60 abgeführt oder in eine Auffangbox am Ende der Fördervorrichtung geführt werden. Somit werden die Ausschussteile nicht aufgenommen und von der Fördervorrichtung 10 und/oder der Abnahmevorrichtung 40 und/oder der Restmaterialabnahmevorrichtung 60 in einen nicht dargestellten Ausschussbehälter befördert.

Die Abnahmevorrichtung 40 kann eine oder mehrere Abnahmemodule 41 mit einem oder mehreren Sauggreifern und/oder Klemmgreifern umfassen (nicht dargestellt). Mit dem Sauggreifer können die Gewebematerialteile 200 von dem Förderband 11 angehoben, abgehoben oder festgehalten werden und optional anschließend mit dem Klemmgreifer fixiert werden. Das eine oder die mehreren Abnahmemodule 41 sind vorzugsweise in Förderrichtung entlang von Linearträgern 42 bewegbar, um die Gewebematerialteile 200 von dem Förderband 11 an der Abnahmeposition A abzunehmen und zur Ablageposition B zu transportieren. Weiter vorzugsweise können die Abnahmemodule 41 quer horizontal zur Förderrichtung bewegbar sein, sodass ein Abnahmemodul 41 Gewebematerialteile 200 abnehmen kann, die in Förderrichtung versetzt zueinander auf dem Förderband 11 angeordnet sind. Es ist auch möglich nur ein Abnahmemodul vorzusehen.

Um eine ausreichende Beleuchtung des Gewebeband bzw. der Schnittkanten bzw. Schnittbereiche zu gewährleisten, kann eine Beleuchtungseinheit 12 zwischen Förderband 11 und Gewebeband 100 vorgesehen sein. Dies kann wie in Figur 4b realisiert werden, indem das Förderband 11 unter der Beleuchtungseinheit verläuft. Es ist aber auch möglich, dass das Förderband 11 im Aufnahmebereich der Erkennungseinheit 30 unterbrochen ist und ein flacher Leuchtkasten angeordnet ist, über den das Gewebematerialband 100 geführt wird, so dass dieses von unten beleuchtet werden kann.

Die Kamera 30 kann weiter eine Beleuchtung (nicht dargestellt) umfassen, um den Aufnahmebereich auch von und/oder oder von der Seite zu beleuchten. Es besteht auch die Möglichkeit, dass die Beleuchtung separat von der Kamera 30 in der Nähe des Aufnahmebereichs angeordnet ist. Neben der herkömmlichen Beleuchtung des Aufnahmebereichs kann auf einer der Kamera 30 gegenüberliegenden Seite der Förderbandes 11 eine zusätzliche Beleuchtung 12 angeordnet sein. Wenn die Kamera 30 auf einer Oberseite des Förderbandes 11 angeordnet ist, befindet sich die zusätzliche Beleuchtung 12 auf einer Unterseite des Förderbandes 11 oder die Kamera 30 befindet sich unterhalb des Förderbandes 11 und die zusätzliche Beleuchtung 12 oberhalb des Förderbandes 11.

Vorzugseise kann das Förderband 11 aus einem transparenten Material ausgebildet sein oder Öffnungen aufweisen, sodass Licht von unten auf die Gewebematerialteile 200 gestrahlt werden kann und die Gewebematerialteile 200 bzw. die Schnitte etc. durch die zusätzliche Beleuchtung sichtbar werden. Es ist aber auch möglich, insbesondere in Verbindung mit einer Linienkamera, das Förderband 11 um die Beleuchtung herumzuführen, wie beispielsweise in Fig 4b dargestellt. Es ist auch möglich, eine Beleuchtungseinheit 12 zwischen Förderband 11 und Materialbahn 100 zu platzieren und das flexible Material 100 über die Beleuchtungseinheit 12 zu ziehen. Die Beleuchtungseinheit 12 ist dabei als flacher Leuchtkasten ausgebildet.

Durch eine starke Beleuchtung von einer gegenüberliegenden Seite der Kamera 30 können Schweißnähte 63, Markierungen 66, Löcher 67 oder verwebte Stellen 63 der Gewebematerialteile 200 für die Kamera 30 besser sichtbar gemacht werden, so dass Fehler bspw. in den Schweißnähten 63 oder verwebten Stellen 63 einfacher und zuverlässiger detektiert werden können. Weiter besteht die Möglichkeit, jeden Ausschnitt eines Gewebematerialteils 200 mit den unterschiedlichen Beleuchtungsquellen 12 mehrfach aufzunehmen. Beispielsweise kann, wenn die Kamera 30 oberhalb des Förderbandes 11 angeordnet ist, eine erste Aufnahme nur mit der Beleuchtung von oben, eine zweite Aufnahme nur mit der zusätzlichen Beleuchtung 12 von unten und eine dritte Aufnahme mit beiden Beleuchtungsquellen 12 durchgeführt werden. Die Aufnahmen mit der jeweils selben Beleuchtungsquelle können dann jeweils wieder entsprechend zu einer Gesamtaufnahme (in diesem Fall 3 Gesamtaufnahmen) zusammengeführt werden. Durch die unterschiedlichen Beleuchtungen können Fehler noch besser detektiert werden, die bei einer herkömmlichen Beleuchtung nicht sichtbar sind. Zudem wird durch mehrere Aufnahmen eine Redundanz ermöglicht, die eine zusätzliche Sicherheit gewährleistet.

Es können auch unterschiedliche Wellenlängen, verschiedene Spektrum oder eine UV Bestrahlung verwendet werden, um die Kontraste besser darzustellen. Das heißt, die Wellenlänge der Beleuchtung 12 bzw. auch der Erkennungseinheit 30 kann an Material angepasst sein.

Die Ausschussteile können in wenigstens zwei Kategorien eingeteilt werden. Gewebematerialteile 200, die beispielsweise unvollständig ausgeschnitten sind oder deren Schnitt bezogen auf die Außenlinie der Soll-Vorgabe außerhalb der Sollschnittkante liegt, können nachgearbeitet werden. Ausschussteile, deren Löcher 67 nicht an den SollPositionen liegen und/oder deren Schnitt auf einer Innenseite der Vorgabe liegt und/oder deren Schnitt in einem Bereich liegt, der allgemein nicht geschnitten werden darf, können nicht nachgearbeitet werden und werden als Ausschuss deklariert und aussortiert.

Weiter besteht die Möglichkeit die Ausschussteile mittels eines Markierers 70 zu kennzeichnen, um eine fälschliche Weiterverarbeitung der Ausschussteile sicher zu vermeiden. Eine Markierung der Ausschussteile kann mittels Laser, Farbe oder jeglicher sonstiger Art erfolgen, die geeignet ist, um das Ausschussteil deutlich als defekt zu kennzeichnen oder aktiv zu zerschneiden. Vorzugsweise ist der Markierer 70 zwischen der Qualitätskontrolle bzw. der Kamera 30 und der Abnahmevorrichtung 40 angeordnet.

Die Figur 5 zeigt eine Anlage ohne Qualitätskontrolle, bei der eine erfindungsgemäße Inline-Qualitätskontrolle nachgerüstet wurde. Elemente mit gleichen Bezugszeichen werden nicht erneut beschrieben, die vorherige Beschreibung gilt auch für die Komponenten in dieser Ausführungsform.

Um eine möglichst einfache und kostengünstige Integration der Inline-Qualitätskontrolle in das bestehende System zu ermöglichen, sollen möglichst viele Komponenten beibehalten werden können. Die in Figur 5 dargestellte Anlage wurde in diesem Fall beispielhaft in die Anlage aus Figur 1 integriert. Die Fördervorrichtung 11 wurde mit einer zweiten Fördervorrichtung 15, an der bisher die manuelle Abnahme und ggf. eine Qualitätskontrolle stattfand, durch ein Verbindungselement 16 verbunden. Das Verbindungselement 16 kann in Form von Gleitblechen, Rollenlagern, als Förderband oder in jeglicher sonstigen Form realisiert sein, die einen Transport des Gewebematerialteils 200 von dem Förderband 11 auf die zweite Fördervorrichtung 15 ermöglicht, sodass das Gewebematerialteil 200 danach nicht mehr erneut ausgelegt, ausgerichtet und glattgestrichen werden muss. Es aber auch möglich, die Komponenten über einer bestehende Fördervorrichtung 10 so anzuordnen, dass die Kamera 30 zur Qualitätskontrolle hinter der Bearbeitungsanlage 20 angeordnet werden kann, ohne eine zweite Fördervorrichtung 15 anzuordnen.

Die automatisierte Inline-Qualitätskontrolle erfolgt dann auf der zweiten Fördervorrichtung 15 oder dem Abschnitt der Fördervorrichtung 10 hinter der Bearbeitungsanlage 20.

Die Kamera 30 und der Markierer 70 sowie die ein oder mehreren Beleuchtungen 12 sind über bzw. in der zweiten Fördervorrichtung 15 angeordnet. Nach der zweiten Fördervorrichtung 15 können die Gewebematerialteile 200 entweder von einem Mitarbeiter oder durch ein Abnahmevorrichtung 40 (nicht dargestellt) abgenommen werden.

D.h. die Abnahmevorrichtung 40 ist optional und kann in entsprechenden Anwendungsfällen auch entfallen. Ebenso kann die Restmaterialabnahmevorrichtung 60 und die Markierungseinheit 70 entfallen.

Die automatisierte Inline-Qualitätskontrolle kann auch wieder einfach auf die manuelle Qualitätskontrolle umgestellt werden. Dies kann sinnvoll sein, wenn die Steuereinheit 50 bei sehr kleinen Stückzahlen über keine Soll-Daten verfügt. Hierfür wird einfach das Verbindungselement 16 entfernt und durch Mitarbeiter ersetzt. Die Glattstreichvorrichtung 80 kann in diesem Fall auch einfach wieder in Betrieb genommen werden.

Die Kamera 30 kann innerhalb des Bearbeitungsbereichs der Laserschneidanlage 20 liegen, um somit direkt bei Erkennen eines Fehlers, die Teile durch Zerschneiden zu Markieren und/oder der Schneidprozess kann für dieses Teil beendet werden

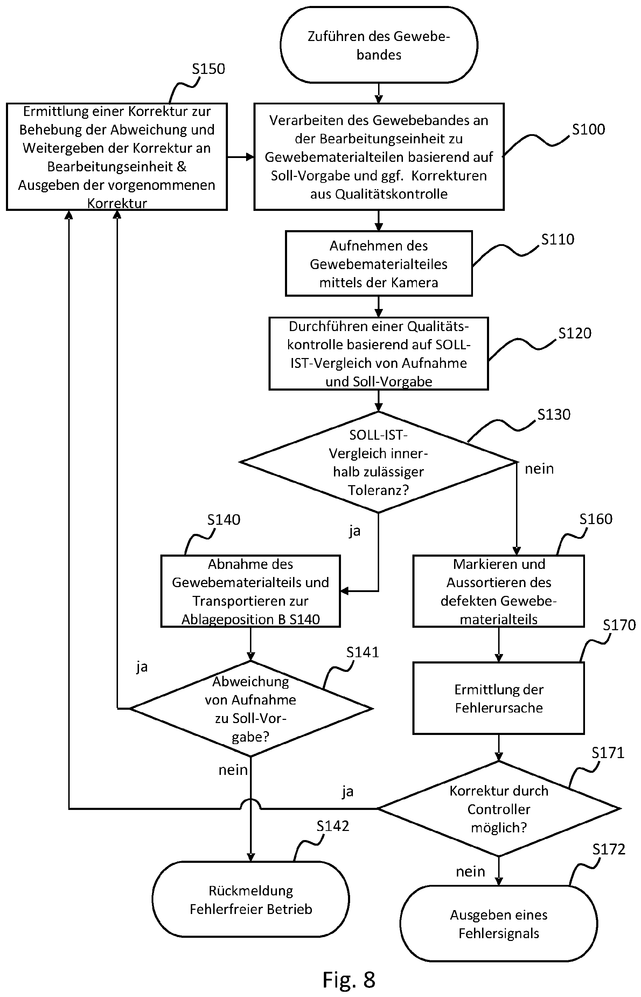

In Figur 8 ist ein Verfahren der erfindungsgemäßen Inline-Qualitätskontrolle dargestellt. Das in Figur 8 dargestellte Flussdiagramm für ein Verfahren zur Inline-Qualitätskontrolle zeigt ein Verfahren mit sehr umfangreichen Funktionen. In seiner einfachsten Ausführungsform sind nicht alle diese Schritte erforderlich. Dies wird nachfolgend im Detail erklärt.

In seiner einfachsten Ausführungsform umfasst das Verfahren der erfindungsgemäßen Inline-Qualitätskontrolle die Schritte des Verarbeiten des Gewebematerialbandes 100 an der Bearbeitungseinheit 20 zu Gewebematerialteilen 200 basierend auf einer Soll-Vorgabe S100; Aufnehmen des Gewebematerialteiles 200 mittels der Kamera S110; Durchführen einer Qualitätskontrolle basierend auf einem SOLL-IST-Vergleich von der Aufnahme des Gewebematerialteils 200 mit der Soll-Vorgabe des Gewebematerialteils S120; und Bewertung, ob das Gewebematerialteil 200 innerhalb der zulässigen Toleranz gefertigt wurde S130.

Sind alle Schnitte, Nähte, verwebten Stellen 63, Löcher 67, Markierungen 66 und Schnittkanten 62 des Gewebematerialteils 200 vorhanden und befinden sich deren Positionen an der richtigen Stelle bzw. innerhalb der zulässigen Toleranz, wird das Gewebematerialteil 200 als gut erkannt und von der Abnahmevorrichtung 40 an der Position A abgenommen und zur Ablageposition B transportiert S140.

Sind nicht alle Schnitte, Nähte, verwebten Stellen, Löcher und Schnittkanten des Gewebematerialteils 200 vorhanden oder befindet sich eines davon nicht an der richtigen Stelle bzw. außerhalb der zulässigen Toleranz, wird das Gewebematerialteil 200 als Ausschuss erkannt S130 und kann von einem Markierer 70 entsprechend markiert werden S160 und von der Abnahmevorrichtung 40, oder der Restgewebeentnahmevorrichtung 60 oder anderweitig einem separaten Ausschussbehälter zugeführt werden.

Die SOLL-Daten für den Abgleich zwischen SOLL-Vorgabe und der Aufnahme des Gewebematerialteils 200 können auf den SOLL-Daten basieren, die der Bearbeitungsstation 20 zur Bearbeitung des Gewebebandes 100 zugrunde liegen.

Der Schritt des Aufnehmens S110 des Gewebematerialteils 200 mittels der Kamera 30 kann dabei auf unterschiedliche Arten erfolgen.

In einer besonderen Ausführungsform ist es möglich, dass bereits erkannte Materialfehler, wie bspw. Webfehler, als Eingangsgröße sowohl der Bearbeitungseinheit 20 als auch der Qualitätskontrolle zugeführt werden. Dadurch wird verhindert, dass Gewebematerialteile 200, die im Bereich eines bekannten Fehlers liegen, fälschlicherweise als gut erkannt und verarbeitet werden. Hier ist auch möglich, dass bereits der Schneidprozess ausgesetzt wird, wenn eine Position eines Gewebematerialteiles 200 in einem Bereich der Gewebebahn 100 liegt, wo ein bekannter Fehler liegt.

## Patentansprüche

1. Schneidanlage umfassend:
eine Fördervorrichtung (10) zum Fördern von flexiblem Material (100);
eine Bearbeitungseinheit (20) zum Schneiden des flexiblen Materials (100) in Materialteile (200);
eine Erkennungseinheit (30) zur Erfassung des flexiblen Materials (100) und/oder wenigstens einen geschnittenen Materialteils (200), wobei die Erkennungseinheit (30) in Förderrichtung hinter der Bearbeitungseinheit (20) angeordnet ist,
eine Steuereinheit (50), die dazu eingerichtet ist, basierend auf einer Information der Erkennungseinheit (30) und/oder auf Markierungsinformationen, ein Qualitätsergebnis zu erzeugen und die Bearbeitungseinheit (20) zu steuern,
**gekennzeichnet dadurch, dass**
das flexible Material (100) ein Gewebeband zur Airbagproduktion ist und die Bearbeitungseinheit (20) eine Laserschneidvorrichtung zum Ausschneiden von Gewebematerialteilen (200) zur Airbagproduktion ist und die Steuereinheit (50) dazu eingerichtet ist, bei einem positiven Qualitätsergebnis das entsprechende ausgeschnittene Gewebematerialteil (200) für die Abnahme freizugeben und bei einem negativen Qualitätsergebnis ein mangelhaftes Airbagteil als Ausschussteil oder als ein nacharbeitbares Airbagteil zu kategorisieren.

2. Schneidanlage nach Anspruch 1, weiter umfassend:
eine Markierungseinheit (70) zur Markierung des flexiblen Materials (100) und/oder des wenigstens einen geschnittenen Materialteils (200) basierend auf dem Qualitätsergebnis, wobei die Markierungseinheit (70) in Förderrichtung vor und/oder hinter der Bearbeitungseinheit (20) angeordnet ist.

3. Schneidanlage nach einem der vorhergehenden Ansprüche, weiter umfassend eine Abnahmevorrichtung (40) zur Abnahme des wenigstens einen geschnittenen Materialteils (200) von der Fördervorrichtung (10), wobei die Abnahmevorrichtung (40) hinter der Erkennungseinheit (30) und/oder hinter der Markierungseinheit (70) angeordnet ist.

4. Schneidanlage nach einem der vorhergehenden Ansprüche, weiter umfassend eine Restmaterialabnahmevorrichtung (60) zur Abnahme eines Restmaterials, wobei die Restmaterialabnahmevorrichtung (60) in Förderrichtung vor oder hinter der Erkennungseinheit (30) und/oder in Förderrichtung vor oder hinter der Markierungseinheit (70) angeordnet ist oder die Restmaterialabnahmevorrichtung (60) in Förderrichtung an der gleichen Position wie die Abnahmevorrichtung (40) oder in Förderrichtung hinter der Abnahmevorrichtung (40) angeordnet ist.

5. Schneidanlage nach einem der vorhergehenden Ansprüche 2 bis 4, wobei die Steuereinheit (50) ferner dazu eingerichtet ist, basierend auf der Information der Erkennungseinheit (30) und/oder auf Markierungsinformation, Abnahmevorrichtung (40), die Restmaterialabnahmevorrichtung (60) und/oder die Markierungseinheit (70) zu steuern.

6. Schneidanlage nach einem der vorhergehenden Ansprüche, wobei die Erkennungseinheit (30) eine Kamera und/oder einen Sender und Empfänger, einen oder mehrere Sensoren und/oder eine Beleuchtungseinheit (12) umfasst.

7. Schneidanlage nach einem der vorhergehenden Ansprüche, wobei die Beleuchtungseinheit (12) Licht mit einer an das Material oder eine Materialkomposition angepassten Wellenlänge ausgibt und/oder wobei das flexible Material (100) zwischen Sender und der Empfänger angeordnet ist und der Sender Ultraschall oder eine Strahlung mit vorgegebener Wellenlänge ausgibt, der/die vom Empfänger empfangen wird, um Information über die Materialzusammensetzung des flexiblen Materials (100) zu erhalten,
vorzugsweise ist die Beleuchtungsvorrichtung (12) auf einer der Erkennungseinheit (30) gegenüberliegenden Seite des flexiblen Materials (200) angeordnet und/oder auf das flexible Material (200) gerichtet ist oder die Beleuchtungsvorrichtung (12) ist zwischen Fördervorrichtung (10) und dem flexiblen Material (100) angeordnet.

8. Schneidanlage nach einem der vorherigen Ansprüche, wobei das Qualitätsergebnis auf einer Überprüfung auf wenigstens einem der folgenden Kriterien basiert:
Position und Anzahl der Nähte
Position und Anzahl von Ausschnitten/Löchern und/oder auf der
Qualität von verwebten Stellen und/oder Schweißnähten und/oder Klebestellen,
Position der verwebten Stellen, Klebestellen und/oder Schweißnähten
Position von Markierungen auf dem flexiblen Material (100)
ob die Außenkontur innerhalb eines vorgegebenen Toleranzbereiches liegt
Position des Schnitts zu den verwebten Positionen und/oder
Materialverzug.

9. Schneidanlage nach einem der vorherigen Ansprüche, wobei die Steuereinheit (50) eingerichtet ist, das wenigstens eine ausgeschnittene Materialteil (200) auf Verzug zu prüfen, ob die Länge und/oder die Breite des wenigstens einen ausgeschnittenen Materialteils (200) den Soll- oder Referenzvorgaben entsprechen, ob Laschen, Vorsprünge oder Ausschnitte am wenigstens einen ausgeschnittenen Materialteil (200) an der jeweiligen korrekten Position angeordnet sind, und/oder ob die Außenkonturen in vorher festgelegten Bereichen liegen.

10. Schneidanlage nach einem der vorherigen Ansprüche, wobei die Erkennungseinheit (30) eine Markierung (66) von Materialfehlern erkennt.

11. Schneidanlage nach Anspruch 3, wobei die Steuereinheit (50) dazu eingerichtet ist, die Abnahmevorrichtung (40) so zu steuern, dass die Ausschussteile und die nacharbeitbaren OPW-Gewebematerialteile (200) getrennt voneinander abgelegt werden und/oder die Steuereinheit (50) dazu eingerichtet ist, basierend auf der Information der Erkennungseinheit (30) einen Fehler und/oder eine Fehlerursache zu identifizieren und/oder diese zu korrigieren und/oder Hinweise auf Fehler und/oder Verschleiß an die Schneidanlage auszugeben; oder wobei die Steuereinheit (50) dazu eingerichtet ist, über eine optische Ausgabeeinheit und/oder eine Markierung und/oder Projektion auf dem Airbagteil ein freigegebenes Airbagteil zu anzuzeigen und/oder bei einem negativen Qualitätsergebnis ein mangelhaftes Airbagteil als Ausschussteil anzuzeigen oder als ein nacharbeitbares Airbagteil anzuzeigen.

12. Schneidanlage nach einem der vorherigen Ansprüche, wobei die Steuereinheit (50) dazu eingerichtet ist die Qualitätskontrolle während eines kontinuierlichen und/oder diskontinuierlichen und/oder gestoppten Betriebs der Schneidanlage durchzuführen.

13. Verfahren zur automatisierten Inline-Qualitätskontrolle von wenigstens einem aus einem flexiblen Material (100) ausgeschnitten Materialteil (200), umfassend die folgenden Schritte:
Zuführen eines flexiblen Materials (100) auf einer Fördervorrichtung (10),
Schneiden (S100) des flexiblen Materials (100) mittels einer Bearbeitungseinheit (20) in ein oder mehrere Materialteile (200);
Erfassen (S110) wenigstens eines Teils des flexiblen Materials (100) und/oder des ausgeschnittenen Materialteils (200) mittels einer Erkennungseinheit (30);
Durchführen (S120-S130) einer Qualitätskontrolle basierend auf Information der Erkennungseinheit (30) und wenigstens einem Referenzwert;
wobei das Erfassen (S110) wenigstens eines Teils des flexiblen Materials (100) und/oder des ausgeschnittenen Materialteils (200) mittels einer Erkennungseinheit (30) nach dem Schneiden (S100) des flexiblen Materials (100) mittels einer Bearbeitungseinheit (20) in ein oder mehrere Materialteile (200) erfolgt,
**dadurch gekennzeichnet, dass**
das flexible Material (100) ein Gewebeband zur Airbagproduktion ist und die Bearbeitungseinheit (20) eine Laserschneidvorrichtung zum Ausschneiden von Gewebematerialteilen (200) zur Airbagproduktion ist und das Verfahren ferner umfasst:
Freigeben des entsprechenden ausgeschnittenen Gewebematerialteils (200) für die Abnahme bei einem positiven Qualitätsergebnis und
Kategorisieren eines mangelhaften Airbagteils als Ausschussteil oder als ein nacharbeitbares Airbagteil bei einem negativen Qualitätsergebnis.

14. Verfahren nach Anspruch 13, wobei das flexible Material (100) ein flexibles Gewebe, eine ein- oder mehrlagige Kunststofffolie oder eine ein- oder mehrlagige Metallfolie, ein Textil, ein technisches Textil und/oder ein wenigstens teilweise einlagiges, zweilagiges und/oder mehrlagiges Gewebe umfasst.

15. Verfahren nach Anspruch 13 oder 14, wobei das flexible Material ein OPW-Gewebeband ist.

## Claims

1. A cutting system, comprising:
a conveying device (10) for conveying flexible material (100);
a processing unit (20) for cutting the flexible material (100) into material parts (200);
a detection unit (30) for detecting the flexible material (100) and/or at least one cut material part (200), wherein the detection unit (30) is arranged behind the processing unit (20) in the conveying direction,
a control unit (50) which is configured, based on information from the detection unit (30) and/or on marking information, to generate a quality result and to control the processing unit (20),
**characterized in that**
the flexible material (100) is a fabric tape for airbag production and the processing unit (20) is a laser cutting device for cutting out fabric material parts (200) for airbag production and the control unit (50) is configured, in case of a positive quality result, to release the corresponding cut-out fabric material part (200) for acceptance and, in case of a negative quality result, to categorize a defective airbag part as a reject part or as a reworkable airbag part.

2. The cutting system according to claim 1, further comprising:
a marking unit (70) for marking the flexible material (100) and/or the at least one cut material part (200) based on the quality result, wherein the marking unit (70) is arranged in front of and/or behind the processing unit (20) in the conveying direction.

3. The cutting system according to any one of the preceding claims, further comprising a removal device (40) for removing the at least one cut material part (200) from the conveyor device (10), wherein the removal device (40) is arranged behind the detection unit (30) and/or behind the marking unit (70).

4. The cutting system according to any one of the preceding claims, further comprising a residual material removal device (60) for removing residual material, wherein the residual material removal device (60) is arranged in the conveying direction in front of or behind the detection unit (30) and/or in the conveying direction in front of or behind the marking unit (70) or the residual material removal device (60) is arranged in the conveying direction at the same position as the removal device (40) or in the conveying direction behind the removal device (40).

5. The cutting system according to any one of the preceding claims 2 to 4, wherein the control unit (50) is further configured, based on the information of the detection unit (30) and/or on marking information, to control the removal device (40), the residual material removal device (60) and/or the marking unit (70).

6. The cutting system according to any one of the preceding claims, wherein the detection unit (30) comprises a camera and/or a transmitter and receiver, one or more sensors and/or an illumination unit (12).

7. The cutting system according to any one of the preceding claims, wherein the illumination unit (12) emits light with a wavelength, adapted to the material or a material composition, and/or wherein the flexible material (100) is arranged between the transmitter and the receiver and the transmitter emits ultrasound or a radiation with a predetermined wavelength, which is received by the receiver, in order to obtain information about the material composition of the flexible material (100),
preferably, the illumination device (12) is arranged on a side of the flexible material (200) opposite the detection unit (30) and/or is directed towards the flexible material (200) or the illumination device (12) is arranged between the conveying device (10) and the flexible material (100).

8. The cutting system according to any one of the preceding claims, wherein the quality result is based on a check on at least one of the following criteria:
position and number of seams
position and number of cutouts/holes and/or on the quality of woven areas and/or welds and/or glued areas,
position of the woven areas, adhesive joints and/or welds
position of markings on the flexible material (100) whether the outer contour lies within a specified tolerance range
position of the cut to the woven positions and/or material distortion.

9. The cutting system according to any one of the preceding claims, wherein the control unit (50) is configured to check the at least one cut-out material part (200) for distortion, whether the length and/or the width of the at least one cut-out material part (200) correspond to the target or reference specifications, whether tabs, projections or cutouts on the at least one cut-out material part (200) are arranged in the respective correct position, and/or whether the outer contours lie in previously defined areas.

10. The cutting system according to any one of the preceding claims, wherein the detection unit (30) detects a marking (66) of material defects.

11. The cutting system according to claim 3, wherein the control unit (50) is configured to control the removal device (40) such that the reject parts and the reworkable OPW fabric material parts (200) are deposited separately from one another and/or the control unit (50) is configured, based on the information from the detection unit (30), to identify a defect and/or a cause of the defect, and/or to correct it and/or to output indications of defects and/or wear to the cutting system; or wherein the control unit (50) is configured to display, via an optical output unit and/or a marking and/or projection on the airbag part, an approved airbag part and/or, in case of a negative quality result, to display a defective airbag part as a reject part or as a reworkable airbag part.

12. The cutting system according to any one of the preceding claims, wherein the control unit (50) is configured to carry out the quality control during a continuous and/or discontinuous and/or stopped operation of the cutting system.

13. A method for automated inline quality control of at least one material part (200) cut out of a flexible material (100), comprising the following steps:
feeding a flexible material (100) on a conveyor device (10),
cutting (S100) the flexible material (100) into one or more material parts (200) by means of a processing unit (20);
detecting (S110) at least a part of the flexible material (100) and/or the cut-out material part (200) by means of a detection unit (30);
carrying out (S120-S130) a quality control, based on information from the detection unit (30) and at least one reference value;
wherein detecting (S110) at least a part of the flexible material (100) and/or the cut-out material part (200) by means of a detection unit (30) takes place after the cutting (S100) of the flexible material (100) by means of a processing unit (20) into one or more material parts (200),
**characterized in that**
the flexible material (100) is a fabric tape for airbag production and the processing unit (20) is a laser cutting device for cutting out fabric material parts (200) for airbag production and the method further comprises:
releasing the corresponding cut-out part of fabric material (200) for acceptance in case of a positive quality result and
categorizing a defective airbag part as a reject part or as a reworkable airbag part in case of a negative quality result.

14. The method according to claim 13, wherein the flexible material (100) comprises a flexible fabric, a single- or multi-layer plastic film or a single- or multi-layer metal foil, a textile, a technical textile and/or an at least partially single-layer, two-layer and/or multi-layer fabric.

15. The method according to claim 13 or 14, wherein the flexible material is an OPW fabric tape.

## Revendications

1. Installation de coupe comprenant :
un dispositif de transport (10) pour transporter un matériau souple (100) ;
une unité d'usinage (20) pour découper le matériau souple (100) en parties de matériau (200) ;
une unité de reconnaissance (30) pour détecter le matériau souple (100) et/ou au moins une partie de matériau coupée (200), dans laquelle l'unité de reconnaissance (30) est agencée après l'unité d'usinage (20) dans une direction de transport ;
une unité de commande (50) qui est configurée pour générer, sur la base d'une information de l'unité de reconnaissance (30) et/ou d'informations de marquage, un résultat concernant la qualité et pour commander l'unité d'usinage (20),
**caractérisée en ce que**
le matériau souple (100) est une bande de tissu pour la production de coussins gonflables et l'unité d'usinage (20) est un dispositif de découpage au laser pour découper des parties de matériau en tissu (200) pour la production de coussins gonflables, et l'unité de commande (50) est configurée pour approuver, en cas de résultat positif concernant la qualité, la partie de matériau en tissu (200) coupée correspondante pour l'enlèvement, et pour classer une partie de coussin gonflable défectueuse comme une partie de rebut ou comme une partie de coussin gonflable pouvant être réusinée.

2. Installation de coupe selon la revendication 1, comprenant en outre :
une unité de marquage (70) pour le marquage du matériau souple (100) et/ou de la au moins une partie de matériau coupée (200) sur la base du résultat concernant la qualité, dans laquelle l'unité de marquage (70) est agencée avant et/ou après l'unité d'usinage (20) dans la direction de transport.

3. Installation de coupe selon l'une des revendications précédentes, comprenant en outre un dispositif d'enlèvement (40) pour enlever la au moins une partie de matériau coupée (200) du dispositif de transport (10), dans laquelle le dispositif d'enlèvement (40) est agencé après l'unité de reconnaissance (30) et/ou après l'unité de marquage (70).

4. Installation de coupe selon l'une des revendications précédentes, comprenant en outre un dispositif d'enlèvement de matériau résiduel (60) pour enlever un matériau résiduel, dans laquelle le dispositif d'enlèvement de matériau résiduel (60) est agencé avant ou après l'unité de reconnaissance (30) dans la direction de transport et/ou avant ou après l'unité de marquage (70) dans la direction de transport, ou le dispositif d'enlèvement de matériau résiduel (60) est agencé à la même position que le dispositif d'enlèvement (40) dans la direction de transport ou après le dispositif d'enlèvement (40) dans la direction de transport.

5. Installation de coupe selon l'une des revendications 2 à 4 précédentes, dans laquelle l'unité de commande (50) est en outre configurée pour commander, sur la base de l'information de l'unité de reconnaissance (30) et/ou de l'information de marquage, le dispositif d'enlèvement (40), le dispositif d'enlèvement de matériau résiduel (60) et/ou l'unité de marquage (70).

6. Installation de coupe selon l'une des revendications précédentes, dans laquelle l'unité de reconnaissance (30) comprend une caméra et/ou un émetteur et un récepteur, un ou plusieurs capteurs et/ou une unité d'éclairage (12).

7. Installation de coupe selon l'une des revendications précédentes, dans laquelle l'unité d'éclairage (12) émet de la lumière à une longueur d'onde adaptée au matériau ou à une composition de matériau et/ou dans laquelle le matériau souple (100) est agencé entre l'émetteur et le récepteur, et l'émetteur émet des ultrasons ou un rayonnement de longueur d'onde prédéterminée qui est ou sont reçus par le récepteur afin d'obtenir une information sur la composition de matériau du matériau souple (100),
le dispositif d'éclairage (12) est de préférence agencé sur un côté du matériau souple (200) opposé à l'unité de reconnaissance (30) et/ou est dirigé vers le matériau souple (200), ou le dispositif d'éclairage (12) est agencé entre le dispositif de transport (10) et le matériau souple (100).

8. Installation de coupe selon l'une des revendications précédentes, dans laquelle le résultat concernant la qualité est basé sur une inspection d'au moins un des critères suivants :
position et nombre de coutures,
position et nombre de découpes/trous et/ou sur la qualité des endroits tissés et/ou des cordons de soudure et/ou des endroits collés,
position des endroits tissés, des endroits collés et/ou des cordons de soudure,
position des marquages sur le matériau souple (100),
si le contour extérieur est dans une plage de tolérance prédéfinie,
position de la découpe par rapport aux positions tissées et/ou
déformation de matériau.

9. Installation de coupe selon l'une des revendications précédentes, dans laquelle l'unité de commande (50) est configurée pour inspecter la déformation de la au moins une partie de matériau coupée (200), si la longueur et/ou la largeur de la au moins une partie de matériau coupée (200) correspondent aux spécifications cibles ou de référence, si des languettes, des saillies ou des découpes sur au moins une partie de matériau coupée (200) sont agencées à la position correcte respective, et/ou si les contours extérieurs sont dans des zones préalablement définies.

10. Installation de coupe selon l'une des revendications précédentes, dans laquelle l'unité de reconnaissance (30) reconnaît un marquage (66) de défauts de matériau.

11. Installation de découpe selon la revendication 3, dans laquelle l'unité de commande (50) est configurée pour commander le dispositif d'enlèvement (40) de telle sorte que les parties de rebut et/ou les parties de matériau en tissu OPW (200) pouvant être réusinées sont stockées séparément les unes des autres et/ou l'unité de commande (50) est configurée pour identifier et/ou corriger, sur la base de l'information de l'unité de reconnaissance (30), un défaut et/ou une cause de défaut et/ou pour fournir à l'installation de coupe des suggestions en cas d'erreur et/ou d'usure ; ou dans laquelle l'unité de commande (50) est configurée pour afficher, via une unité de sortie optique et/ou un marquage et/ou une projection sur la partie de coussin gonflable, une partie de coussin gonflable approuvée et/ou pour afficher, en cas de résultat négatif concernant la qualité, une partie de coussin gonflable défectueuse comme une partie de rebut ou pour l'afficher comme une partie de coussin d'air pouvant être réusinée.

12. Installation de coupe selon l'une des revendications précédentes, dans laquelle l'unité de commande (50) est configurée pour effectuer le contrôle de qualité pendant un fonctionnement continu et/ou discontinu et/ou arrêté de l'installation de coupe.

13. Procédé de contrôle de qualité en ligne automatisé d'au moins une partie de matériau (200) découpée à partir d'un matériau souple (100), comprenant les étapes suivantes consistant à :
fournir un matériau souple (100) sur un dispositif de transport (10),
découper (S100) le matériau souple (100) en une ou plusieurs parties de matériau (200) au moyen d'une unité d'usinage (20) ;
détecter (S110) au moins une partie du matériau souple (100) et/ou de la partie de matériau coupée (200) au moyen d'une unité de reconnaissance (30) ;
effectuer (S120-S130) un contrôle de qualité sur la base de l'information de l'unité de reconnaissance (30) et d'au moins une valeur de référence ;
dans lequel la détection (S110) d'au moins une partie du matériau souple (100) et/ou de la partie de matériau coupée (200) est effectuée au moyen d'une unité de reconnaissance (30) après la découpe (S100) du matériau souple (100) au moyen d'une unité d'usinage (20) en une ou plusieurs parties de matériau (200),
**caractérisé en ce que**
le matériau souple (100) est une bande de tissu pour la production de coussins gonflables et l'unité d'usinage (20) est un dispositif de découpage au laser pour découper des parties de matériau en tissu (200) pour la production de coussins gonflables, et le procédé comprend en outre de :
approuver la partie de matériau en tissu (200) découpée correspondante pour l'enlèvement en cas de résultat positif concernant la qualité et
classer une partie de coussin gonflable défectueuse comme une partie de rebut ou comme une partie de coussin gonflable pouvant être réusinée en cas de résultat négatif concernant la qualité.

14. Procédé selon la revendication 13, dans lequel le matériau souple (100) comprend un tissu souple, un film de matière plastique mono- ou multi-couche ou un film métallique mono- ou multi-couche, un textile, un textile technique et/ou un tissu au moins partiellement monocouche, bicouche et/ou multicouche.

15. Procédé selon la revendication 13 ou 14, dans lequel le matériau souple est une bande de tissu OPW.
